Europäisches Patentamt

European Patent Office

Office européen des brevets

(11) Veröffentlichungsnummer: **0 069 169**
**A1**

(12) # EUROPÄISCHE PATENTANMELDUNG

(21) Anmeldenummer: **81107952.4**

(22) Anmeldetag: **06.10.81**

(51) Int. Cl.³: **C 04 B 7/26**
//C04B31/10

(30) Priorität: **08.07.81 DE 3126889**

(43) Veröffentlichungstag der Anmeldung:
**12.01.83 Patentblatt 83/2**

(84) Benannte Vertragsstaaten:
**AT BE CH FR GB IT LI LU NL SE**

(71) Anmelder: **Bottke, Rainer**
**Josef-Hollerbach-Strasse 40**
**D-7560 Gaggenau(DE)**

(72) Erfinder: **Bottke, Rainer**
**Josef-Hollerbach-Strasse 40**
**D-7560 Gaggenau(DE)**

(74) Vertreter: **Geitz, Heinrich, Dr.-Ing.**
**Postfach 2708 Kaiserstrasse 156**
**D-7500 Karlsruhe 1(DE)**

(54) Beton mit einer gegenüber der aus dem Wasser-Zementwert-Gesetz ableitbaren Endfestigkeit erhöhten Endfestigkeit.

(57) Der Beton mit einer gegenüber der aus dem Wasser-Zementwert-Gesetz ableitbaren Endfestigkeit erhöhten Endfestigkeit, besteht aus einem Gemenge aus innig miteinander vermischten Zuschlagstoffen, Zement und Wasser. Die eingesetzte Wassermenge ist durch die Erfordernisse der Verarbeitbarkeit bestimmt. Die Zuschlagstoffe sind ihrer Körnung nach durch Sieblinie bestimmt und bestehen zu einem vorbestimmten Anteil aus extrem feinkörnigem Material. Durch dieses extrem feinkörnige Material, bei dem es sich insbesondere um Flugasche handeln kann, ist das Zuschlaggefüge so dicht gelagert, daß beim erhärteten Beton äußere Kräfte zumindest zu einem wesentlichen Teil über den Betonzuschlag weitergeleitet werden.

EP 0 069 169 A1

DR. ING. HEINRICH GEITZ PATENTANWALT 7500 KARLSRUHE 1, POSTFACH 2708

- I -

811855

Anmelder:    Rainer Bottke, Bauingenieur
             Josef-Hollerbach-Straße 40
             D-7560 Gaggenau

Beton mit einer gegenüber der aus dem Wasser-Zementwert-Gesetz ableitbaren Endfestigkeit erhöhten Endfestigkeit

===========================================================

Die Erfindung bezieht sich auf Beton mit einer gegenüber der aus dem Wasser-Zementwert-Gesetz ableitbaren Endfestigkeit erhöhten Endfestigkeit, bestehend aus einem Gemenge aus innig miteinander vermischten Zuschlagstoffen, Zement und Wasser, wobei die Zuschlagstoffe ihrer Körnung nach durch Sieblinie und die eingesetzte Wassermenge durch die Erfordernisse der Verarbeitbarkeit bestimmt sind.

811855

-2-

Die Bestimmung der Endfestigkeit von Beton nach dem Wasser-Zementwert-Gesetz ist ebenso bekannt wie die Tatsache, daß bei Zementen gleicher Normaldruckfestigkeit das Verhältnis von Wassergehalt zu Zementgehalt (der sogenannte W/Z-Wert) für die Festigkeit des Zementsteins und damit des Betons bestimmend ist. Der Bestimmung der Normaldruckfestigkeit eines Zementes liegt dabei, nach der einschlägigen DIN-Norm, ein Wasser-Zementverhältnis von 0,5 zugrunde.

Die Verarbeitbarkeit eines Betons ist im wesentlichen abhängig vom Wassergehalt im Verhältnis zur eingesetzten Zementmenge, die sich ihrerseits wiederum aus einschlägigen Gütevorschriften in Verbindung mit der Sieblinienwahl für die Zuschlagstoffe ergibt. Wenn im Interesse der geforderten Verarbeitbarkeit eines Betons ein bestimmter Wassergehalt ermittelt ist, kann im Einklang mit den vorgenannten Parametern anhand des Wasser-Zementwert-Gesetzes der für eine geforderte Festigkeit notwendige Zementgehalt bestimmt werden.

Die Ermittlung des für eine bestimmte Betonfestigkeit notwendigen Zementgehaltes gelingt auch, ausgehend von einem in Abhängigkeit von der geforderten Verarbeitbarkeit festgelegten Wassergehalt, wenn die Normdruckfestigkeit des
einzusetzenden Zementes von der geforderten Betonfestigkeit abweicht, indem das für die geforderte Betonfestigkeit notwendige Wasser-Zementverhältnis bestimmt wird.
Dabei gilt grundsätzlich, daß der W/Z-Wert höher als
0,5 liegen kann, wenn die Betonfestigkeit niedriger als
die Normdruckfestigkeit des Zementes liegen soll, daß hingegen der W/Z-Wert kleiner als 0,5 sein muß, wenn die
Betondruckfestigkeit größer sein soll als die Normdruckfestigkeit des einzusetzenden Zementes.

Da die Betonfestigkeit durch das Verhältnis Wasser zu
Zement bestimmt wird und die geforderte Verarbeitbarkeit
nur bei Einsatz eines bestimmten Wasseranteils erreicht
werden kann, bestimmt letztlich die geforderte Verarbeitbarkeit den Zementanteil, der in aller Regel über dem
unter dem Gesichtspunkt der geforderten Betonfestigkeit
erforderlichen Zementanteil liegt.

Der Wasseranteil kann bei Betonen zwar ohne Beeinträchtigung der Verarbeitbarkeit durch den Einsatz bekannter Verflüssiger und - in Grenzen - auch durch eine entsprechende
Änderung der Sieblinie der Zuschlagstoffe reduziert werden, womit ohne Minderung der geforderten Festigkeit auch eine Reduzierung des Zementanteils gelingt, aber einer solchen Reduzierung des Wasseranteils sind enge Grenzen gesetzt. So würde eine Verringerung des Wasseranteils von 30 Liter je m$^3$ Beton bei einem W/Z-Wert von 0,6 auf eine Reduzierung des Zementanteils um ca. 50 kg führen, welcher Wert jedoch nicht erreicht werden kann, weil dann dem Beton zuviel "Leim" fehlt; im oben angeführten Beispiel ca. 46 Liter. Diese fehlende Leimmenge beeinträchtigt wiederum die Verarbeitbarkeit des Betons so nachhaltig, daß dieser für viele Einsatzfälle der Praxis unbrauchbar wird. Darüber hinaus gehen die Kosten für die einzusetzenden Verflüssiger in die Größenordnung der durch die Reduzierung des Zementanteils ersparten Kosten.

Insoweit erscheinen die bekannten Betone verbesserungsbedürftig, zumal in der Praxis häufig Betone benötigt werden, die zur Verringerung des Schwindmaßes, der Temperaturentwicklung und auch aus Kostengründen reduzierte Zementanteile haben.

Das Ziel der vorliegenden Erfindung besteht daher in der Schaffung eines Betons mit einer gegenüber der aus dem Wasser-Zementwert-Gesetz ableitbaren Endfestigkeit erhöhten Endfestigkeit, der mithin bei Vorgabe einer bestimmten Festigkeit einen gegenüber dem sich aus dem Wasser-Zementwert-Gesetz ergebenden Zementanteil reduzierten Zementanteil benötigt, wobei die Minderung des Zementanteils nicht zu Lasten der Verarbeitbarkeit erkauft sein soll.

Diese Aufgabe ist bei einem Beton nach dem Oberbegriff des Patentanspruchs 1 erfindungsgemäß dadurch gelöst, daß durch den Zusatz extrem feinkörniger Zuschlagstoffe zu den nach Sieblinie bestimmten Zuschlagstoffen das Zuschlaggefüge so dicht gelagert wird, daß beim erhärteten Beton äußere Kräfte zumindest zu einem erheblichen Teil über den Betonzuschlag weitergeleitet werden.

Diese Lösung der Erfindungsaufgabe beruht auf der erfindungsgemäßen Erkenntnis, daß, nachdem der Wassergehalt des Betons als praktisch unveränderbare Größe gelten muß, eine drastische Senkung des Zementgehaltes nur dann gelingen kann, wenn das Wasser-Zementwert-Gesetz die Betonfestigkeit nicht bestimmt. Eingehende Untersuchungen haben gezeigt, daß in der Tat die Festig-

811855

- 6 -

keit eines Betons, bei dem die nach Sieblinie bestimmten Zuschlagstoffe durch den Einsatz zusätzlicher Zuschlagstoffe mit extrem feiner Körnung in solcher Packungsdichte gelagert werden, daß äußere Kräfte beim erhärteten Beton zumindest zu einem wesentlichen Teil über den Betonzuschlag weitergeleitet werden, nicht durch das Wasser-Zementwert-Gesetz bestimmt ist. Bei einem derartig ausgebildeten Beton dient der Zementstein im wesentlichen nur dazu, das Zuschlagstoffgerüst zu verkitten, ist aber am Lastabtrag allenfalls nur unerheblich beteiligt.

Die Ableitung äußerer Kräfte im wesentlichen über den Betonzuschlag wird insbesondere dann bei - ausgehärtetem - Beton erreicht, wenn es sich - in Ausgestaltung der vorliegenden Erfindung - bei den feinkörnigen Zuschlägen, die zum Erzielen großer Packungsdichte als Zusatz zu den nach Sieblinie bestimmten Zuschlagstoffen eingesetzt werden, um kugeförmige Zuschlagstoffe handelt. Insbesondere hat sich insoweit ungemahlene Flugasche, die in großen Mengen in Kohlekraftwerken anfällt, als vorteilhaft erwiesen.

811855

-Y-

In weiterer Ausgestaltung der Erfindung ist es zweckmäßig, wenn der Anteil der als zusätzliche Zuschlagstoffe
feiner Körnung eingesetzten Flugasche mehr als 20 Prozent
der nach dem Wasser-Zementwert-Gesetz bestimmten Zementmenge beträgt. Unter gleichzeitiger Senkung des sich aus
dem Wasser-Zementwert-Gesetz ergebenden Zementanteils
kann, in weiterer Ausgestaltung der Erfindung, der Anteil
der eingesetzten Flugasche erhöht werden, und zwar etwa
proportional zur Reduzierung des Zementanteils unter die
sich nach dem Wasser-Zementwert-Gesetz bestimmende Menge
bis zu einem Flugascheanteil etwa gleich dem Zementanteil.

Diese Maßnahmen können ohne Beeinträchtigung der Verarbeitbarkeit derartiger Betone zu einer beachtlichen
Erhöhung der Endfestigkeit einerseits und einer drastischen Reduzierung des Zementanteils andererseits führen.

Der Einsatz von Flugasche, die in Kohlekraftwerken in
großen Mengen als Abfallprodukt anfällt, als pozzulanisches Bindemittel bei Betonen ist zwar seit Jahren bekannt. Um aber chemisch zu reagieren, muß mindestens die
vierfache Menge an Zement vorhanden sein. Daß infolge
des gezielten Einsatzes von Flugasche eine die physika-

- 8 -

lischen Eigenschaften von Beton wesentlich bestimmende
Verdichtung der Zuschlagstoffe erreicht und damit die
erzielbare Betondruckfestigkeit weitestgehend unabhängig
von dem bisher als allein maßgeblich angenommenen Wasser-
Zementwert-Gesetz eingestellt werden kann, war hingegen
nicht erkannt worden. Dies blieb der vorliegenden Erfindung ebenso vorbehalten, wie auf die Möglichkeit hinzuweisen, durch den gezielten Einsatz von Flugasche als zusätzlichen Zuschlagstoff feinkörniger Konsistenz einerseits gegenüber dem Stande der Technik die erzielbaren
Beton-Endfestigkeiten merklich zu erhöhen und andererseits
die erforderlichen Zementanteile zum Teil drastisch zu
senken.

Dies soll nachstehend anhand von Rezepturen für Betonwaren einerseits und für Transportbeton andererseits im
Vergleich zu Rezepturen nach dem Stande der Technik gezeigt werden:

1. Ausführungsbeispiel Betonwaren:

| | Stand der Technik | nach der Erfindung |
|---|---|---|
| Rheinsand 0/2 | 35 % | 20 % |
| Rheinkies 2/16 | 65 % | 80 % |
| Zement PZ 45 F | 360 kg | 180 kg |
| Wasser | 160 l | 150 l |
| W/Z | 0,44 | 0,83 |
| W+Schaum/Z | 0,44 | 0,83 |
| Festigkeit nach W/Z-Wert-Gesetz | ca. 60 N/mm$^2$ | ca. 28 N/mm$^2$ |
| Istfestigkeit 28 Tage | ca. 60 N/mm$^2$ | ca. 100 N/mm$^2$ |
| Istfestigkeit 24 Stunden | ca. 36 N/mm$^2$ | ca. 25 N/mm$^2$ |
| Zuschlagstoffe (Flugasche) | | 180 kg |

- 10 -

2. Ausführungsbeispiel Transportbeton B25 0/32 K2

| | Stand der Technik | nach der Erfindung |
|---|---|---|
| Rheinsand 0/2 | 33 % | 25 % |
| Rheinkies 2/32 | 67 % | 75 % |
| Zement PZ 45 F | 300 kg | 180 kg |
| Wasser | 180 l | 155 l |
| W/Z | 0,6 | 0,86 |
| W+Schaum/Z | 0,6 | 0,86 |
| Festigkeit nach W/Z-Wert-Gesetz | ca. 34 $N/mm^2$ | ca. 19,5 $N/mm^2$ |
| Istfestigkeit 28 Tage | ca. 34 $N/mm^2$ | ca. 39 $N/mm^2$ |
| Istfestigkeit 3 Tage | ca. 22 $N/mm^2$ | ca. 15 $N/mm^2$ |
| Zusatzstoff | | 170 kg |

- I -

811855

Anmelder:    Rainer Bottke, Bauingenieur

Josef-Hollerbach-Straße 40

D-7560   Gaggenau

Patentansprüche
===============

1.  Beton mit einer gegenüber der aus dem Wasser-Zementwert-Gesetz ableitbaren Endfestigkeit erhöhten Endfestigkeit, bestehend aus einem Gemenge aus innig miteinander
vermischten Zuschlagstoffen, Zement und Wasser, wobei die
Zuschlagstoffe ihrer Körnung nach durch Sieblinie und die
eingesetzte Wassermenge durch die Erfordernisse der Verarbeitbarkeit bestimmt sind, dadurch gekennzeichnet,

daß durch den Zusatz extrem feinkörniger Zuschlagstoffe
zu den nach Sieblinie bestimmten Zuschlagstoffen das Zuschlaggefüge so dicht gelagert wird, daß beim erhärteten

811855

- 2 -

Beton äußere Kräfte zumindest zu einem wesentlichen Teil über den Betonzuschlag weitergeleitet werden.

2. Beton nach Anspruch 1, dadurch gekennzeichnet, daß es sich bei den zum Erzielen großer Packungsdichte als Zusatz zu den nach Sieblinie bestimmten Zuschlagstoffen eingesetzten feinkörnigen Zuschlägen um kugelförmige Zuschlagstoffe handelt.

3. Beton nach Anspruch 1 oder 2, dadurch gekennzeichnet, daß als zusätzliche Zuschlagstoffe feiner Körnung ungemahlene Flugasche zugesetzt wird.

4. Beton nach Anspruch 3, dadurch gekennzeichnet, daß der Anteil der als zusätzliche Zuschlagstoffe feiner Körnung eingesetzten Flugasche mehr als 20 Prozent der nach dem Wasser-Zementwert-Gesetz bestimmten Zementmenge beträgt.

5. Beton nach Anspruch 3 oder 4, gekennzeichnet durch die Reduzierung des Zementanteils unter die nach dem Wasser-Zementwert-Gesetz bestimmte Menge.

- 3 -

6. Beton nach einem der Ansprüche 3 bis 5, dadurch gekennzeichnet, daß der Zementanteil proportional zur Erhöhung des Flugascheanteils unter die nach dem Wasser-Zementwert-Gesetz bestimmte Menge reduziert wird.

7. Beton nach einem der Ansprüche 3 bis 6, gekennzeichnet durch einen Flugascheanteil etwa gleich dem Zementanteil.

## Europäisches Patentamt
## EUROPÄISCHER RECHERCHENBERICHT

EP 81 10 7952.4

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | US - A - 4 240 952 (C.E. HULBERT et al.) <br> * Ansprüche 1, 2, 4, 6; Spalte 2, Zeilen 38 bis 48; Spalte 3, Zeile 58 * <br> -- | 1-4,7 | C 04 B   7/26 <br> // C 04 B 31/10 |
| X | US - A - 4 210 457 (V.H. DODSON et al.) <br> * Ansprüche 1, 2, 4 bis 9, 12, 15; Tabelle V * <br> -- | 1-4,7 | |
| A | US - A - 4 050 950 (W.E. BREWER et al.) <br> * Anspruch 1; Beispiel 3 * <br> -- | 1,4,7 | **RECHERCHIERTE SACHGEBIETE (Int. Cl.³)** |
| A | GB - A - 940 692 (HOUILLERES DU BASSIN DE LA LOIRE) <br> * Anspruch 1; Seite 1, Zeilen 39 bis 56, 73 * <br> -- | | C 04 B   7/00 <br> C 04 B 13/00 <br> C 04 B 15/00 <br> C 04 B 31/10 |
| E <br><br> X | "Soviet Inventions Illustrated" <br> Woche D 45, 16 Dezember 1981 <br> Sektion L 02 <br> & SU - A - 804 604 <br> ---- | | |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 21-09-1982 | STROUD |

EPA form 1503.1   06.78